# EUROPEAN PATENT APPLICATION

(11) **EP 4 636 924 A1**
(43) Date of publication of application: **22.10.2025**
(21) Application number: 23953992.7
(22) Date of filing: 29.11.2023
(51) Int. Cl.: H01M 50/342, H01M 50/103, H01M 50/143

(54) **BATTERY CELL, BATTERY, AND ELECTRICAL APPARATUS**

(30) Priority: 26.09.2023 CN 202311249667
(71) Applicant: Contemporary Amperex Technology Co., Limited, Ningde, Fujian 352100 (CN)
(72) Inventor: WU, Kai, Ningde, Fujian 352100 (CN); GU, Mingguang, Ningde, Fujian 352100 (CN); LIU, Sike, Ningde, Fujian 352100 (CN); LI, Yao, Ningde, Fujian 352100 (CN); CHEN, Shilong, Ningde, Fujian 352100 (CN)
(74) Representative: Herrmann, Uwe
(86) International application number: PCT/CN2023/135201
(87) International publication number: WO 2025/065859

(57) **Abstract**

A battery cell, a battery, and an electric apparatus are provided, capable of reducing the impact of the formation process of a pressure relief score on a surface of a housing of the battery cell. The battery cell includes a first wall and a second wall perpendicular to the first wall, where a pressure relief score is integrally formed on the first wall, an isolation groove is provided in a region on the first wall between the pressure relief score and the second wall, the pressure relief score includes a main body portion, and the main body portion is opposite to the isolation groove in a direction perpendicular to the second wall. In the direction perpendicular to the second wall, a ratio of a distance between the main body portion and the second wall to a dimension of the main body portion is greater than or equal to 10.

## Description

### CROSS-REFERENCE TO RELATED APPLICATIONS

This application claims priority to Chinese Patent Application No. 202311249667.0, filed on September 26, 2023, and entitled "BATTERY CELL, BATTERY, AND ELECTRIC APPARATUS", the entire content of which is incorporated herein by reference.

### TECHNICAL FIELD

The present application relates to the field of battery technology, and in particular, to a battery cell, a battery, and an electric apparatus.

### BACKGROUND

Energy conservation and emission reduction are key to the sustainable development of the automotive industry. Electric vehicles, due to their advantages in energy saving and environmental protection, have become an important component of the sustainable development of the automotive industry. For electric vehicles, battery technology is a significant factor in their development. A battery is composed of battery cells, and the battery cells are provided with pressure relief scores configured for releasing internal pressure. Reducing the impact of the formation process of the pressure relief scores on other parts of the battery cell has become an urgent issue to be addressed.

### SUMMARY

An embodiment of the present application provides a battery cell, a battery, and an electric apparatus, capable of reducing the impact of the formation process of pressure relief scores on a surface of a housing of the battery cell.

According to a first aspect, a battery cell is provided, including a first wall and a second wall perpendicular to the first wall, where a pressure relief score is integrally formed on the first wall, an isolation groove is provided in a region on the first wall between the pressure relief score and the second wall, the pressure relief score includes a main body portion, and the main body portion is opposite to the isolation groove in a direction perpendicular to the second wall.

In the direction perpendicular to the second wall, a ratio of a distance between the main body portion and the second wall to a dimension of the main body portion is greater than or equal to 10. Preferably, in the direction perpendicular to the second wall, the ratio of the distance between the main body portion and the second wall to the dimension of the main body portion is greater than or equal to 12.

During the process of stamping the pressure relief score on the first wall of the battery cell, extruded material flows to the periphery of the pressure relief score. In the process of forming the housing through techniques such as precision drawing, this material may accumulate on the second wall perpendicular to the first wall, thereby causing defects on the surface of the housing and affecting its flatness. In the present application, an isolation groove is provided on the first wall of the battery cell where the pressure relief score is located, the isolation groove being positioned between the pressure relief score and the second wall, such that the isolation groove can accommodate the material extruded during the formation of the pressure relief score on the first wall, preventing the material from flowing toward the second wall in subsequent processes, thereby reducing the impact of the formation process of the pressure relief score on the surface of the housing of the battery cell.

In some possible implementations, an opening of the isolation groove faces a same direction as an opening of the pressure relief score. This allows the material extruded during the formation of the pressure relief score on the first wall to be promptly blocked by the isolation groove.

In some possible implementations, multiple isolation grooves are provided, and the multiple isolation grooves are arranged on two sides of the pressure relief score in the direction perpendicular to the second wall. By arranging the isolation grooves on two sides of the pressure relief score, the material extruded from two sides of the pressure relief score can be blocked by the isolation grooves on two sides.

In some possible implementations, the second wall is a wall with a largest area of the battery cell, also referred to as a "large wall". Since the formation process of the pressure relief score has the greatest impact on the large wall of the battery cell, arranging the isolation groove between the pressure relief score and the large wall is beneficial to reducing the impact on the large wall of the battery cell.

In some possible implementations, a projection of the pressure relief score on the first wall includes the main body portion extending along a first direction, and two extension portions respectively located at two ends of the main body portion and extending along a second direction. For example, the extension portions are located on one side of the main body portion in the second direction; or the extension portions are located on two sides of the main body portion in the second direction.

The first direction intersects with the second direction. For example, the first direction is parallel to the second wall, and the second direction is perpendicular to the second wall.

In this implementation, the pressure relief score may be in an I-like shape or a square-like shape with an open end, including the main body portion extending along the first direction and two extension portions respectively located at two ends of the main body portion and extending along the second direction. This enables the internal pressure of the battery cell to be released simultaneously along the first direction and the second direction to the outside, improving the initiation uniformity of the pressure relief score, thus enhancing the stability of the pressure relief score.

In some possible implementations, a projection of the isolation groove on a side where the extension portions are located on the first wall is located between the two extension portions in the first direction and does not extend beyond ends of the two extension portions in the second direction. Since the region between the two extension portions of the pressure relief score is a location where material tends to accumulate during the formation process of the pressure relief score, arranging the isolation groove between the two extension portions enables the isolation groove to accommodate more extruded material, which is beneficial to reducing the impact of this material on the surface of the housing of the battery cell in subsequent processes.

In some possible implementations, a dimension of the main body portion along the first direction is equal to a sum of dimensions of the two extension portions along the second direction. This ensures that the lengths of the pressure release paths in the first direction and the second direction are the same, making the pressure borne by the pressure relief score more uniform, thereby improving the stability of the pressure relief score.

In some possible implementations, a projection of the pressure relief score on the first wall is annular. Using an annular pressure relief score allows the internal pressure of the battery cell to be released in all directions, improving the initiation uniformity of the pressure relief score, thus enhancing the stability of the pressure relief score.

In some possible implementations, a projection of the isolation groove on the first wall is annular and surrounds the pressure relief score. Since the material extruded during the formation of an annular pressure relief score overflows in all directions, arranging the isolation groove as an annular shape surrounding the pressure relief score can effectively block the material overflowing from all directions.

In some possible implementations, a thickness of a region on the first wall where the isolation groove is located is greater than a thickness of a region on the first wall where the pressure relief score is located. To ensure that the pressure relief function of the pressure relief score is not affected, a depth of the isolation groove should be less than a depth of the pressure relief score, meaning that the thickness of the region on the first wall where the isolation groove is located is greater than the thickness of the region where the pressure relief score is located.

In some possible implementations, the thickness of the region on the first wall where the isolation groove is located is greater than or equal to the thickness of the region on the first wall where the pressure relief score is located and less than or equal to five times the thickness of the region on the first wall where the pressure relief score is located. Preferably, the thickness of the region on the first wall where the isolation groove is located is greater than or equal to two times the thickness of the region on the first wall where the pressure relief score is located and less than or equal to three times the thickness of the region on the first wall where the pressure relief score is located. When the thickness of the region on the first wall where the isolation groove is located and the thickness of the region where the pressure relief score is located satisfy the above relationship, the impact of the isolation groove on the pressure relief function of the pressure relief score can be reduced, while not affecting the ability of the isolation groove to block extruded material.

In some possible implementations, in the direction perpendicular to the second wall, a distance between a portion of the isolation groove opposite to the pressure relief score and the second wall is greater than or equal to a dimension of the isolation groove. Preferably, in the direction perpendicular to the second wall, the distance between the portion of the isolation groove opposite to the pressure relief score and the second wall is greater than or equal to three times the dimension of the isolation groove.

When the distance between the isolation groove and the second wall satisfies the above relationship, the material extruded during the formation of the isolation groove itself on the first wall is less likely to flow to the second wall, thereby reducing the impact of the material extruded during the formation of the isolation groove on the second wall in subsequent processes.

In some possible implementations, in the direction perpendicular to the second wall, a distance between the portion of the isolation groove opposite to the pressure relief score and the pressure relief score is greater than or equal to the dimension of the isolation groove. Preferably, in the direction perpendicular to the second wall, the distance between the portion of the isolation groove opposite to the pressure relief score and the pressure relief score is greater than or equal to three times the dimension of the isolation groove.

When the distance between the isolation groove and the pressure relief score satisfies the above relationship, the impact of the formation of the isolation groove on the morphology of the pressure relief score can be reduced, thereby reducing the impact on the burst pressure of the pressure relief score.

In some possible implementations, the pressure relief score includes a multi-step structure. During the formation of the pressure relief score, multiple stampings can be performed at corresponding positions on the first wall, with each stamping forming one step, thereby obtaining the pressure relief score through multiple forming steps. The stepwise formation of the pressure relief score can reduce the granularity of the extruded material, thereby reducing the impact on the surface of the housing of the battery cell.

In some possible implementations, the battery cell includes an electrode assembly, a housing, and an end cover. The housing is configured to accommodate the electrode assembly, and the end cover is configured to cover the electrode assembly within the housing, where the first wall is a wall of the housing opposite to the end cover, for example, a bottom wall, meaning that the pressure relief score can be provided on the bottom wall of the housing. In this way, after the pressure relief score is formed by stamping on the first wall, the housing with the pressure relief score can be formed through a precision drawing process. Since the isolation groove is also provided on the first wall, the material extruded during stamping can be accommodated in the isolation groove, making it less likely to accumulate on the surface of the housing after the precision drawing process, thereby reducing the possibility of defects such as protrusions on the surface of the housing.

According to a second aspect, a battery is provided, including the battery cell described in the first aspect or any possible implementation of the first aspect.

According to a third aspect, an electric apparatus is provided, including the battery described in the second aspect or any possible implementation of the second aspect.

### BRIEF DESCRIPTION OF DRAWINGS

To more clearly illustrate the technical solutions of the embodiments of the present application, the drawings required for use in the embodiments of the present application are briefly described below. It is apparent that the drawings described below are only some embodiments of the present application, and those of ordinary skill in the art can obtain other drawings based on these drawings without creative effort.
FIG. 1 is a schematic structural diagram of a vehicle according to an embodiment of the present application.
FIG. 2 is a schematic structural diagram of a battery according to an embodiment of the present application.
FIG. 3 is a schematic structural diagram of a battery cell according to an embodiment of the present application.
FIG. 4 is a schematic side view of a pressure relief score and an isolation groove according to an embodiment of the present application.
FIG. 5 is a schematic top view of a pressure relief score and an isolation groove according to an embodiment of the present application.
FIG. 6 is a schematic diagram of a pressure relief score and an isolation groove according to another embodiment of the present application.
FIG. 7 is a schematic diagram of a pressure relief score and an isolation groove according to another embodiment of the present application.
FIG. 8 is a schematic diagram of a pressure relief score and an isolation groove according to another embodiment of the present application.
FIG. 9 is a schematic diagram of a pressure relief score and an isolation groove according to another embodiment of the present application.
FIG. 10 is a schematic diagram of steps of a pressure relief score according to an embodiment of the present application.

In the drawings, the drawings are not drawn to actual scale.

### DESCRIPTION OF EMBODIMENTS

To make the objectives, technical solutions, and advantages of the embodiments of the present application clearer, the technical solutions in the embodiments of the present application are described clearly below with reference to the drawings in the embodiments of the present application. It is apparent that the described embodiments are some, but not all embodiments of the present application. Based on the embodiments in the present application, all other embodiments obtained by those of ordinary skill in the art without creative effort fall within the scope of protection of the present application.

Unless otherwise defined, all technical and scientific terms used in the present application have the same meanings as commonly understood by those skilled in the technical field of the present application. The terms used in the specification of the present application are for the purpose of describing specific embodiments only and are not intended to limit the present application. The terms "include" and "have" and any variations thereof in the specification, claims, and the above description of the drawings of the present application are intended to cover non-exclusive inclusion. The terms "first", "second", and the like in the specification, claims, or the above drawings of the present application are used to distinguish different objects and are not used to describe a specific order or primary-secondary relationship.

The directional terms appearing in the following description are directions shown in the drawings and do not limit the specific structure of the present application. In the description of the present application, it should also be noted that, unless otherwise expressly specified and limited, the terms "mount", "join", and "connect" should be understood in a broad sense. For example, it may be a fixed connection, a detachable connection, or an integral connection; or it may be a direct connection or an indirect connection through an intermediate medium. Those of ordinary skill in the art can understand the specific meanings of these terms in the present application as appropriate to specific situations.

Reference to "embodiment" in the present application means that a specific feature, structure, or characteristic described with reference to the embodiment may be included in at least one embodiment of the present application. The appearance of this term in various places in the specification does not necessarily refer to the same embodiment, nor is it an independent or alternative embodiment mutually exclusive with other embodiments. Those skilled in the art explicitly and implicitly understand that the embodiments described in the present application can be combined with other embodiments.

The term "and/or" in the present application is merely an association relationship describing associated objects, indicating that three relationships may exist. For example, A and/or B may indicate: A exists alone, A and B exist simultaneously, and B exists alone. In addition, the character "/" in the present application generally indicates an "or" relationship between the contextually associated objects.

The term "multiple" appearing in the present application refers to two or more. Similarly, "multiple groups" refers to two or more groups, and "multiple pieces" refers to two or more pieces.

In the embodiments of the present application, the battery cell may be a secondary battery, where the secondary battery refers to a battery cell that can be recharged to activate active materials for continuous use after the battery cell is discharged. The battery cell may be, for example, a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, or a lead-acid battery, which is not limited by the embodiments of the present application.

The battery cell generally includes an electrode assembly. The electrode assembly includes a positive electrode, a negative electrode, and a separator. During the charging and discharging process of the battery cell, active ions, such as lithium ions, intercalate and deintercalate back and forth between the positive electrode and the negative electrode. The separator is arranged between the positive electrode and the negative electrode to prevent a short circuit between the positive electrode and the negative electrode and to allow the active ions to pass through.

In some embodiments, the positive electrode may be a positive electrode plate, where the positive electrode plate includes a positive electrode current collector and a positive electrode active material provided on at least one surface of the positive electrode current collector.

The positive electrode current collector has two surfaces opposite in its thickness direction, and the positive electrode active material is provided on either or both of the two opposite surfaces of the positive electrode current collector.

In an example, the positive electrode current collector may be a metal foil current collector or a composite current collector. For example, as a metal foil, aluminum or stainless steel treated with a silver surface, stainless steel, copper, aluminum, nickel, carbon electrode, carbon, nickel, or titanium may be used. The composite current collector may include a polymer material substrate and a metal layer. The composite current collector may be formed by forming a metal material, such as aluminum, aluminum alloy, nickel, nickel alloy, titanium, titanium alloy, silver, or silver alloy, on a polymer material substrate, such as polypropylene, polyethylene terephthalate, polybutylene terephthalate, polystyrene, or polyethylene.

The positive electrode active material includes, for example, at least one of the following materials: lithium-containing phosphate, lithium transition metal oxide, and their respective modified compounds. The present application is not limited to these materials, and other conventional materials that can be used as positive electrode active materials for batteries may also be used. These positive electrode active materials may be used alone or in combination of two or more. Examples of lithium-containing phosphate may include, but are not limited to, at least one of lithium iron phosphate, such as LiFePO₄ (also abbreviated as LFP), a composite material of lithium iron phosphate and carbon, lithium manganese phosphate, such as LiMnPO₄, a composite material of lithium manganese phosphate and carbon, lithium manganese iron phosphate, or a composite material of lithium manganese iron phosphate and carbon.

In some embodiments, the negative electrode may be a negative electrode plate, where the negative electrode plate includes a negative electrode current collector and a negative electrode active material provided on at least one surface of the negative electrode current collector.

The negative electrode current collector has two surfaces opposite in its thickness direction, and the negative electrode active material is provided on either or both of the two opposite surfaces of the negative electrode current collector.

In an example, the negative electrode current collector may be a metal foil current collector or a composite current collector. For example, as a metal foil, the negative electrode current collector may use aluminum or stainless steel treated with a silver surface, stainless steel, copper, aluminum, nickel, baked carbon, carbon, nickel, or titanium. The composite current collector may include a polymer material substrate and a metal layer. The composite current collector may be formed by forming a metal material, such as copper, copper alloy, nickel, nickel alloy, titanium, titanium alloy, silver, or silver alloy, on a polymer material substrate, such as polypropylene, polyethylene terephthalate, polybutylene terephthalate, polystyrene, or polyethylene.

The negative electrode active material includes, for example, at least one of the following materials: artificial graphite, natural graphite, soft carbon, hard carbon, silicon-based materials, tin-based materials, and lithium titanate.

In some embodiments, the negative electrode may also use a foamed metal. The foamed metal may be foamed nickel, foamed copper, foamed aluminum, foamed alloy, or foamed carbon. It should be noted that when the foamed metal is used as the negative electrode plate, the surface of the foamed metal may not be provided with a negative electrode active material or may be provided with a negative electrode active material.

Optionally, the negative electrode current collector may also be filled and/or deposited with a lithium source material, potassium metal, or sodium metal, where the lithium source material includes lithium metal and/or lithium-rich material.

The material of the positive electrode current collector may be, for example, aluminum, and the material of the negative electrode current collector may be, for example, copper.

The separator in the electrode assembly is provided between the positive electrode and the negative electrode. In some embodiments, the separator is a separating film. The present application does not limit the type of separating film, and any porous structure separating film with good chemical stability and mechanical stability can be selected. For example, the main material of the separating film may be selected from at least one of glass fiber, non-woven fabric, polyethylene, polypropylene, polyvinylidene fluoride, and ceramic.

In some embodiments, the separator is a solid electrolyte. The solid electrolyte is arranged between the positive electrode and the negative electrode and serves to transport ions and isolate the positive electrode and the negative electrode.

In some embodiments, the battery cell further includes an electrolyte, where the electrolyte serves to conduct ions between the positive electrode and the negative electrode. The present application does not limit the type of electrolyte, which can be selected according to requirements. The electrolyte may be liquid, gel, or solid.

In the embodiments of the present application, the electrode assembly may have a wound structure, where the positive electrode plate and the negative electrode plate are wound to form a wound structure. The electrode assembly may also have a laminated structure. For example, multiple positive electrode plates and multiple negative electrode plates may be alternately stacked. Alternatively, multiple positive electrode plates may be provided, and a negative electrode plate may be folded to form multiple stacked folding segments, with a positive electrode plate sandwiched between adjacent folding segments, or both the positive electrode plate and the negative electrode plate may be folded to form multiple stacked folding segments.

Multiple separators may be provided, each arranged between any adjacent positive electrode plate and negative electrode plate.

In some embodiments, the separator may be continuously provided and arranged between any adjacent positive electrode plate and negative electrode plate by folding or winding.

The shape of the electrode assembly may be, for example, cylindrical, flat, or prismatic. The electrode assembly may be provided with tabs, including a positive tab and a negative tab, configured to conduct current from the electrode assembly.

In some embodiments, the battery cell includes a shell. The shell is configured to encapsulate components such as the electrode assembly and the electrolyte. The shell may be a steel shell, an aluminum shell, a plastic shell, such as polypropylene, a composite metal shell, such as a copper-aluminum composite shell, or an aluminum-plastic film. The shell includes a case and a cover plate.

The battery cell may be, for example, a cylindrical battery cell, a prismatic battery cell, a pouch battery cell, or a battery cell of other shapes. The prismatic battery cell includes a square-shell battery cell, a blade-shaped battery cell, or a multi-prismatic battery, where the multi-prismatic battery may be a hexagonal prismatic battery or the like, which is not limited by the present application.

The battery described in the embodiments of the present application may be a single physical module including one or more battery cells to provide higher voltage and capacity. In a case of multiple battery cells, the multiple battery cells are connected in series, parallel, or a combination thereof through a busbar component.

In some embodiments, the battery may be a battery module. In a case of multiple battery cells, the multiple battery cells are arranged and fixed to form a battery module.

In some embodiments, the battery may be a battery pack, where the battery pack includes a case and battery cells, and the battery cells or battery modules are accommodated in the case.

In some embodiments, the case may be used as part of the chassis structure of a vehicle. For example, a part of the case may form at least a portion of the vehicle floor, or a part of the case may form at least a portion of a crossbeam and a longitudinal beam of the vehicle.

For the battery, the main safety hazards come from the charging and discharging processes. To improve the safety performance of the battery, a pressure relief mechanism is usually provided on the battery cell. The pressure relief mechanism refers to, for example, an element or component that is actuated to release internal pressure or temperature when the internal pressure or temperature of the battery cell reaches a predetermined threshold. The predetermined threshold may be adjusted based on different design requirements of the battery. The threshold may depend on the materials of one or more of the positive electrode plate, the negative electrode plate, the electrolyte, and the separating film in the battery cell. The pressure relief mechanism may use elements or components sensitive to pressure or temperature. Specifically, in a case that the internal pressure or temperature of the battery cell reaches the threshold, the pressure relief mechanism is actuated to form a channel for releasing the internal pressure or temperature. After the pressure relief mechanism is actuated, high-temperature and high-pressure substances inside the battery cell are discharged as emissions from the pressure relief mechanism to the outside of the battery cell. In this way, the battery cell can release pressure under controllable pressure or temperature conditions, thereby avoiding potentially more serious accidents. The emissions from the battery cell include, but are not limited to, high-temperature and high-pressure gases generated by reactions, electrolyte, dissolved or fragmented positive and negative electrode plates, fragments of the separating film, and flames.

For a scored pressure relief mechanism, it is typically integrally formed on the surface of the housing of the battery cell. In the embodiments of the present application, such a pressure relief mechanism is also referred to as a pressure relief score. For example, the pressure relief score may be formed by stamping, and the material extruded during the stamping process flows to the periphery of the pressure relief score. In the subsequent process of forming the housing, for example, through precision drawing, this material may accumulate on the surface of the housing of the battery cell, causing defects on the surface of the housing and affecting its flatness.

In view of this, the embodiments of the present application aim to provide an isolation groove on the first wall of the battery unit where the pressure relief score is located to block the material extruded during the formation of the pressure relief score from flowing to the surface of the housing, thereby addressing the impact of this material on the surface of the housing.

The technical solutions described in the embodiments of the present application are applicable to various apparatuses using batteries, such as mobile phones, portable devices, laptops, electric scooters, electric toys, electric tools, electric vehicles, ships, and spacecraft. For example, spacecraft include airplanes, rockets, space shuttles, and spaceships.

It should be understood that the technical solutions described in the embodiments of the present application are not limited to the apparatuses described above but are applicable to all apparatuses using batteries. However, for the sake of brevity, the following embodiments are described using electric vehicles as an example.

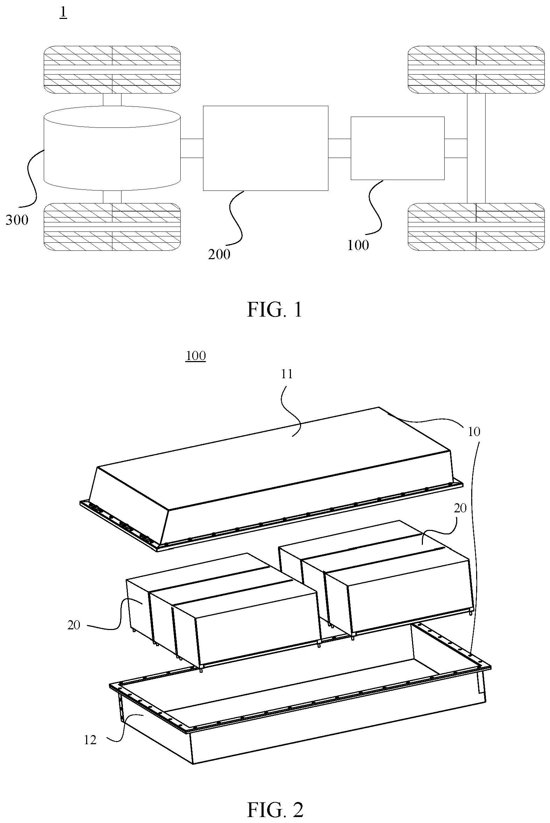

For example, FIG. 1 is a schematic structural diagram of a vehicle 1 according to an embodiment of the present application. The vehicle 1 may be a fossil fuel vehicle, a natural gas vehicle, or a new energy vehicle. The new energy vehicle may be a battery electric vehicle, a hybrid electric vehicle, a range-extended electric vehicle, or the like. A motor 300, a controller 200, and a battery 100 may be provided inside the vehicle 1, where the controller 200 is configured to control the battery 100 to supply power to the motor 300. For example, the battery 100 may be provided at the bottom, front, or rear of the vehicle 1. The battery 100 is configured to supply power to the vehicle 1. For example, the battery 100 may be used as an operational power source for the vehicle 1, configured for a circuit system of the vehicle 1, for example, to satisfy the power needs for starting, navigation, and running of the vehicle 1. In another embodiment of the present application, the battery 100 can be used not only as the operational power source for the vehicle 1 but also as a driving power source for the vehicle 1, replacing or partially replacing fossil fuel or natural gas to provide driving traction for the vehicle 1.

To meet different power usage requirements, the battery may include multiple different types of battery cells. The multiple battery cells may be grouped according to the type of battery cells through series, parallel, or mixed connections to form multiple battery cell groups, and these multiple battery cell groups are then connected in series to form a battery, where mixed connection is a combination of series and parallel connections. Multiple different battery cells may also directly form a battery through series, parallel, or mixed connections. In other words, multiple battery cells may directly constitute a battery, or they may first be grouped according to the type of battery cells to form battery cell groups, which are then used to form a battery.

FIG. 2 is a schematic structural diagram of a battery 100 according to an embodiment of the present application, where the battery 100 may include multiple battery cells 20. The battery 100 may further include a case 10, where the interior of the case 10 is a hollow structure, and the multiple battery cells are accommodated within the case 10. The case 10 may include two parts, referred to here as a first case part 11 and a second case part 12, where the first case part 11 and the second case part 12 are snap-fitted together. The shapes of the first case part 11 and the second case part 12 may be determined based on the combined shape of the multiple battery cells, and at least one of the first case part 11 and the second case part 12 has an opening.

For example, as shown in FIG. 2, both the first case part 11 and the second case part 12 may be hollow structures with only one surface as an open surface, the openings of the first case part 11 and the second case part 12 are arranged opposite to each other, and the first case part 11 and the second case part 12 are snap-fitted together to form the case 10 with a closed chamber. After being combined in parallel, series, or mixed connections, the multiple battery cells are placed in the case 10 formed by the snap-fitting of the first case part 11 and the second case part 12.

For another example, unlike what is shown in FIG. 2, only one of the first case part 11 and the second case part 12 is a hollow cuboid with an opening, while the other is plate-shaped to cover the opening. For example, the second case part 12 is a hollow structure with only one surface as an open surface and the first case part 11 is plate-shaped. In this case, the first case part 11 covers the opening of the second case part 12 to form a case 10 with a closed chamber, and the chamber can be used to accommodate the multiple battery cells. After being combined in parallel, series, or mixed connections, the multiple battery cells are placed in the case 10 formed by the snap-fitting of the first case part 11 and the second case part 12.

In addition, the battery 100 may include other structures, such as a signal transmission assembly configured to transmit signals such as voltage and/or temperature of the battery cells. The signal transmission assembly may include a harness plate, and the harness plate, for example, includes a temperature sensor and a voltage sampling line, configured to measure and transmit information such as voltage, current, and temperature of the battery, and communicate with a BMS to achieve safety management of the battery 100.

In some embodiments, the signal transmission assembly may further include a busbar component configured to achieve electrical connection between the multiple battery cells, such as parallel, series, or mixed connections. The busbar component may enable the electrical connection between the battery cells by connecting the electrode terminals of the battery cells. In some embodiments, the busbar component may be fixed to the electrode terminals of the battery cells by welding. The busbar component transmits the voltage of the battery cell. Multiple battery cells achieve a relatively high voltage after being connected in series. Correspondingly, the electrical connection formed by the busbar component may also be referred to as a "high-voltage connection".

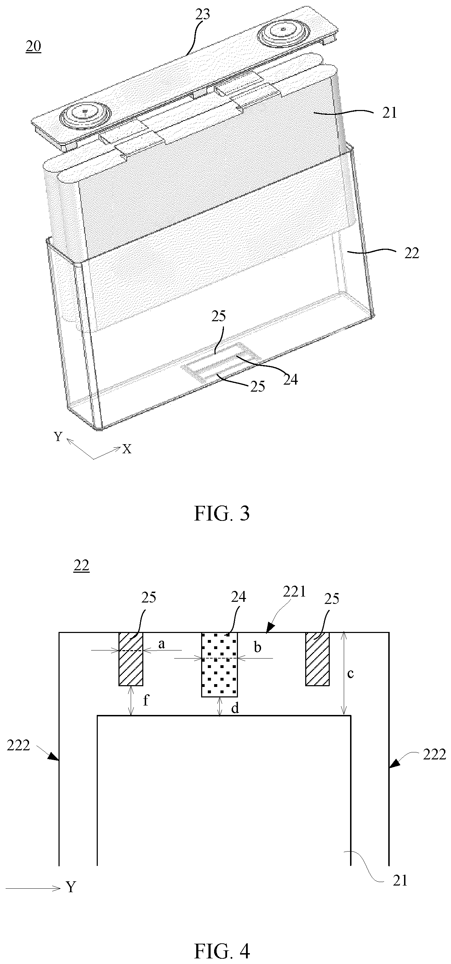

As an example, FIG. 3 is a schematic structural diagram of a battery cell 20 according to an embodiment of the present application. As shown in FIG. 3, the battery cell 20 includes an electrode assembly 21, a housing 22, and an end cover 23, where the housing 22 is configured to accommodate the electrode assembly 21, and the end cover 23 is configured to cover the electrode assembly 21 within the housing 22. The end cover 23 and the housing 22 may be connected, for example, by welding.

In the embodiments of the present application, the battery cell 20 includes a first wall 221 and a second wall 222, where the second wall 222 is perpendicular to the first wall 221, a pressure relief score 24 is provided on the first wall 221, and an isolation groove 25 is provided in a region on the first wall 221 between the pressure relief score 24 and the second wall 222.

As an example, as shown in FIG. 3, the first wall 221 may be a wall of the housing 22 opposite to the end cover 23, that is, the bottom wall of the housing 22. Optionally, the pressure relief score 24 is formed on the first wall 221 through an integral forming process. For example, an integral scored pressure relief score 24 is formed by stamping on the first wall 221 using a punching machine. During the stamping process, the material stamps out from the scored portion of the pressure relief score 24 and flows to the periphery of the pressure relief score 24. In the process of forming the housing 22 through a precision drawing process, this material accumulates on the surface of the housing 22, for example, on the second wall 222 perpendicular to the first wall 221, causing surface defects on the housing 22, such as protrusions, which affects the flatness of the surface of the housing 22.

The second wall 222 may be, for example, the wall with the largest area of the battery cell 20, also referred to as the "large wall". Since the formation process of the pressure relief score 24 has the greatest impact on the large wall of the battery cell 20, providing the isolation groove 25 between the pressure relief score 24 and the large wall is beneficial to reducing the impact on the large wall of the battery cell 20.

In the embodiments of the present application, an isolation groove 25 is provided on the first wall 221 of the battery cell 20 where the pressure relief score 24 is located, the isolation groove 25 being positioned between the pressure relief score 24 and the second wall 222, such that the isolation groove 25 accommodates the material extruded during the formation of the pressure relief score 24 on the first wall 221, preventing the material from flowing toward the second wall 222 in subsequent processes, thereby reducing the impact on the surface of the housing 22 of the battery cell 20.

In some embodiments, an opening of the isolation groove 25 faces the same direction as an opening of the pressure relief score 24. This allows the material extruded during the formation of the pressure relief score 24 on the first wall 221 to be promptly blocked by the isolation groove 25.

In some embodiments, multiple isolation grooves 25 are provided, and the multiple isolation grooves 25 are arranged on two sides of the pressure relief score 24 in a direction perpendicular to the second wall 222. In this way, the material extruded from two sides of the pressure relief score 24 is blocked by the isolation grooves 25 on two sides. For example, the multiple isolation grooves 25 may be symmetrically arranged on two sides of the pressure relief score 24.

Optionally, the pressure relief score 24 includes a main body portion 241, where the main body portion 241 is opposite to the isolation groove 25 in the direction perpendicular to the second wall 222, and in the direction perpendicular to the second wall 222, a ratio of a distance between the main body portion 241 and the second wall 222 to a dimension of the main body portion 241 is greater than or equal to 10. Preferably, in the direction perpendicular to the second wall 222, the ratio of the distance between the main body portion 241 and the second wall 222 to the dimension of the main body portion 241 is greater than or equal to 12.

It can be understood that a portion of the pressure relief score 24 with more extruded material, such as the main body portion 241, particularly requires isolation. In the direction perpendicular to the second wall 222, in a case that the distance between the main body portion 241 and the second wall 222 is too small, the extruded material corresponding to the main body portion 241 more easily flows to the second wall 222, thereby causing surface defects on the second wall 222. In this case, a corresponding isolation groove 25 is provided between the main body portion 241 and the second wall 222 to block the extruded material corresponding to the main body portion 241 from flowing to the second wall 222 in subsequent processes.

In the direction perpendicular to the second wall 222, the distance between the main body portion 241 and the second wall 222 is correlated with the dimension of the main body portion 241. In a case that the distance between the main body portion 241 and the second wall 222 is large, the extruded material corresponding to the main body portion 241 has sufficient space to flow evenly without affecting the surface of the second wall 222, so an isolation groove 25 is not provided between the main body portion 241 and the second wall 222. However, in a case that the distance between the main body portion 241 and the second wall 222 is small, the extruded material corresponding to the main body portion 241 flows to the surface of the second wall 222 in subsequent processes, thereby affecting the second wall 222. A larger dimension of the main body portion 241 in the direction perpendicular to the second wall 222 indicates more extruded material corresponding to the main body portion 241, and a greater distance required between the pressure relief score 24 and the second wall 222. Setting the ratio of the distance between the main body portion 241 and the second wall 222 to the dimension of the main body portion 241 to be greater than or equal to 10, preferably greater than or equal to 12, effectively reduces the impact of the material extruded during the formation of the pressure relief score 24 on the second wall 222.

In the embodiments of the present application, the direction perpendicular to the second wall 222 may be a direction at an angle of 90° to the second wall 222, or, due to deviations caused by manufacturing processes or deformation during battery use, this direction may not be strictly equal to 90° to the second wall 222 but may be slightly less than or slightly greater than 90°.

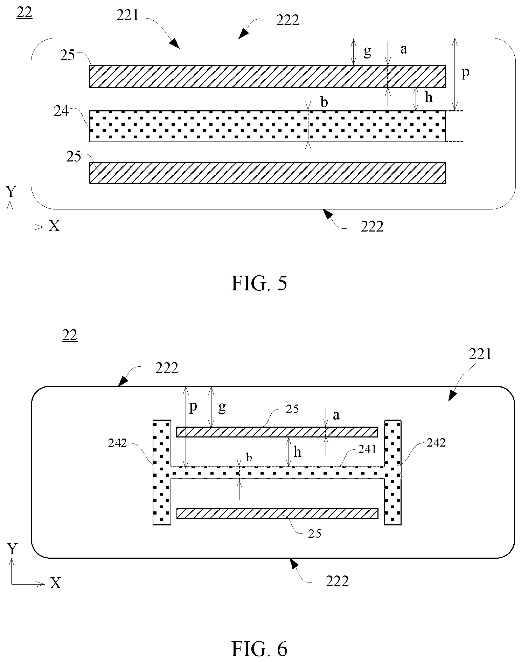

As an example, as shown in FIG. 4 and FIG. 5, taking two isolation grooves 25 as an example, the two isolation grooves 25 are respectively located on two sides of the pressure relief score 24 in the direction perpendicular to the second wall 222, that is, the second direction Y. In the second direction Y, a ratio p/b of a distance p between the pressure relief score 24 and the second wall 222 to a dimension b of the pressure relief score 24 is ≥ 10; preferably, p/b ≥ 12. It should be noted that for the rectangular pressure relief score 24 shown in FIG. 4 and FIG. 5, the main body portion 241 is the entire pressure relief score 24.

As shown in Table 1, assuming the dimension b of the pressure relief score 24 in the second direction Y was 4 mm, the thickness of the second wall 222 of the housing 22 exceeding its standard wall thickness, that is, the thickening value of the second wall 222, was tested in a case of p/b = 2, p/b = 4, p/b = 6, p/b = 8, p/b = 10, p/b = 12, and p/b = 14. To improve the accuracy of the test results, four tests were conducted, and the average of the four test results was taken as the test result.

**Table 1**

| p (mm) | b (mm) | p/b | Thickening of the second wall (mm) | | | |
|---|---|---|---|---|---|---|
| | | | Test 1 | Test 2 | Test 3 | Test 4 |
| 8 | 4 | 2 | 1.21 | 1.32 | 2.11 | 1.55 |
| 16 | 4 | 4 | 0.53 | 0.82 | 0.66 | 0.71 |
| 24 | 4 | 6 | 0.32 | 0.41 | 0.49 | 0.39 |
| 32 | 4 | 8 | 0.26 | 0.31 | 0.29 | 0.26 |
| 40 | 4 | 10 | 0.19 | 0.17 | 0.18 | 0.19 |
| 48 | 4 | 12 | 0.05 | 0.09 | 0.12 | 0.10 |
| 56 | 4 | 14 | 0.07 | 0.05 | 0.02 | 0.03 |

The test data in Table 1 was processed to obtain the following:
For p/b = 2, the average thickening value from the four tests was (1.21 + 1.32 + 2.11 + 1.55) / 4 = 1.55.
For p/b = 4, the average thickening value from the four tests was (0.53 + 0.82 + 0.66 + 0.71) / 4 = 0.68.
For p/b = 6, the average thickening value from the four tests was (0.32 + 0.41 + 0.49 + 0.39) / 4 = 0.40.
For p/b = 8, the average thickening value from the four tests was (0.26 + 0.31 + 0.29 + 0.26) / 4 = 0.28.
For p/b = 10, the average thickening value from the four tests was (0.19 + 0.17 + 0.18 + 0.19) / 4 = 0.18.
For p/b = 12, the average thickening value from the four tests was (0.05 + 0.09 + 0.12 + 0.10) / 4 = 0.09.
For p/b = 14, the average thickening value from the four tests was (0.07 + 0.05 + 0.02 + 0.03) / 4 = 0.04.

In a case that the requirements for the second wall 222 are high, the thickening of the second wall 222 caused by extruded material should be less than 0.2 mm; and exceeding 0.2 mm is considered to have a relatively serious impact on the second wall 222. From the above test results, it can be seen that in a case of p/b ≥ 10, the thickening value of the second wall 222 can reach a level of less than or equal to 0.2, meeting the requirements for the second wall 222 in most scenarios. In particular, in a case of p/b ≥ 12, the thickening value of the second wall 222 can reach a level of less than or equal to 0.1, which may be considered that the extruded material essentially does not affect the second wall 222, making it suitable for scenarios with higher requirements for the second wall 222.

To accommodate as much as possible the material overflowing in all directions from the pressure relief score 24. Optionally, the multiple isolation grooves 25 may alternatively be arranged around the pressure relief score 24. For example, isolation grooves 25 are provided on all sides of the pressure relief score 24.

The pressure relief score 24 in the embodiments of the present application may be in a rectangular shape, an annular shape, an I-like shape, a cross-like shape, a square-like shape with an open end, or other possible shapes. Correspondingly, the isolation groove 25 may be configured to have the same shape as the pressure relief score 24 or a different shape from the pressure relief score 24.

In some embodiments, projections of the pressure relief score 24 and the isolation groove 25 on the first wall 221 may be rectangular to reduce the process complexity of the pressure relief score 24 and the isolation groove 25. For example, as shown in FIG. 4 and FIG. 5, the pressure relief score 24 is a rectangular score, and the isolation groove 25 is also a rectangular score. The long sides of the isolation groove 25 and the pressure relief score 24 are parallel to the long side of the first wall 221, that is, parallel to the first direction X. The short sides of the isolation groove 25 and the pressure relief score 24 are parallel to the short side of the first wall 221, that is, parallel to the second direction Y.

In some other embodiments, as shown in FIG. 6 to FIG. 8, a projection of the pressure relief score 24 on the first wall 221 includes a main body portion 241 extending along the first direction X and two extension portions 242 respectively located at two ends of the main body portion 241 and extending along the second direction Y.

The first direction X intersects with the second direction Y. For example, the first direction X is parallel to the second wall 222, and the second direction Y is perpendicular to the second wall 222.

Hereafter, the battery cell 20 of the embodiments of the present application is described with an example where the first direction X is parallel to the second wall 222 and the second direction Y is perpendicular to the second wall 222.

In this embodiment, the pressure relief score 24 includes a main body portion 241 extending along the first direction X and two extension portions 242 respectively located at two ends of the main body portion 241 and extending along the second direction Y. This enables the internal pressure of the battery cell 20 to be released simultaneously along the first direction X and the second direction Y to the outside, improving the initiation uniformity of the pressure relief score 24, thus enhancing the stability of the pressure relief score 24.

In some embodiments, the extension portions 242 are located on two sides of the main body portion 241 in the second direction Y; or the extension portions 242 are located on one side of the main body portion 241 in the second direction Y.

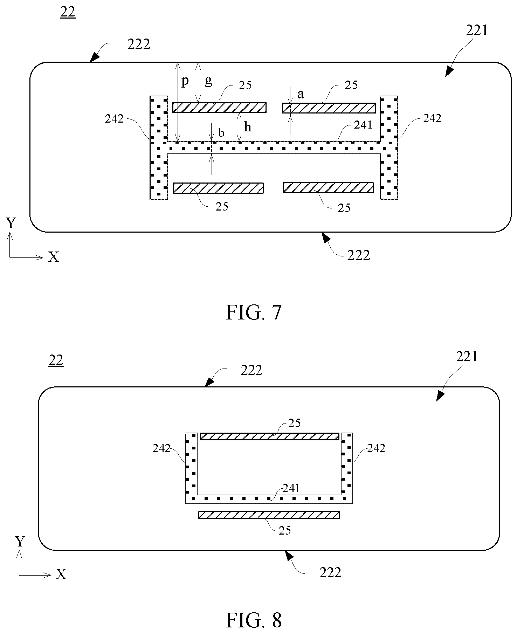

In a case that the extension portions 242 are located on two sides of the main body portion 241 in the second direction Y, the pressure relief score 24 is in an I-like shape, as shown in FIG. 6 or FIG. 7. In a case that the extension portions 242 are located on one side of the main body portion 241 in the second direction Y, the pressure relief score 24 is in a square-like shape with an open end, as shown in FIG. 8.

In some embodiments, a projection of the isolation groove 25 on the side where the extension portions 242 are located on the first wall 221 is located between the two extension portions 242 in the first direction X and does not extend beyond the ends of the two extension portions 242 in the second direction Y.

Since the region between the two extension portions 242 of the pressure relief score 24 is a location where material tends to accumulate during the formation process of the pressure relief score 24, providing the isolation groove 25 between the two extension portions 242 enables the isolation groove 25 to accommodate more extruded material, which is beneficial to reducing the impact of this material on the surface of the housing 22 in subsequent processes.

For example, as shown in FIG. 6 and FIG. 7, two isolation grooves 25 and four isolation grooves 25 are respectively used as examples, where the isolation grooves 25 are symmetrically distributed on two sides of the main body portion 241 of the pressure relief score 24, and a projection of the isolation groove 25 on the first wall 221 is located between the two extension portions 242 in the first direction X and does not extend beyond the ends of the two extension portions 242 in the second direction Y.

For another example, as shown in FIG. 8, taking two isolation grooves 25 as an example, the two isolation grooves 25 are respectively provided on two sides of the main body portion 241 of the pressure relief score 24. The projection of the isolation groove 25 located on the upper side of the main body portion 241 of the pressure relief score 24 on the first wall 221 is located between the two extension portions 242 in the first direction X and does not extend beyond the ends of the two extension portions 242 in the second direction Y. The isolation groove 25 located on the lower side of the main body portion 241 has the same dimensions as the isolation groove 25 located on the upper side of the main body portion 241 and is symmetrically arranged relative to the main body portion 241.

Optionally, a dimension of the main body portion 241 along the first direction X is equal to a sum of dimensions of the two extension portions 242 along the second direction Y, ensuring that the lengths of the pressure release paths in the first direction X and the second direction Y are the same, making the pressure borne by the pressure relief score 24 more uniform, thereby improving the stability of the pressure relief score 24.

Further, in a case that the widths of the main body portion 241 and the extension portions 242 are equal, that is, the dimension of the main body portion 241 in the second direction Y is equal to the dimension of the extension portions 242 in the first direction X, the area of the main body portion 241 is equal to the sum of the areas of the two extension portions 242, such that the areas of the pressure release paths in the first direction X and the second direction Y are the same, making the pressure borne by the pressure relief score 24 more uniform, thereby improving the stability of the pressure relief score 24.

In some other embodiments, a projection of the pressure relief score 24 on the first wall 221 is annular. Optionally, a projection of the isolation groove 25 on the first wall 221 is annular and surrounds the pressure relief score 24.

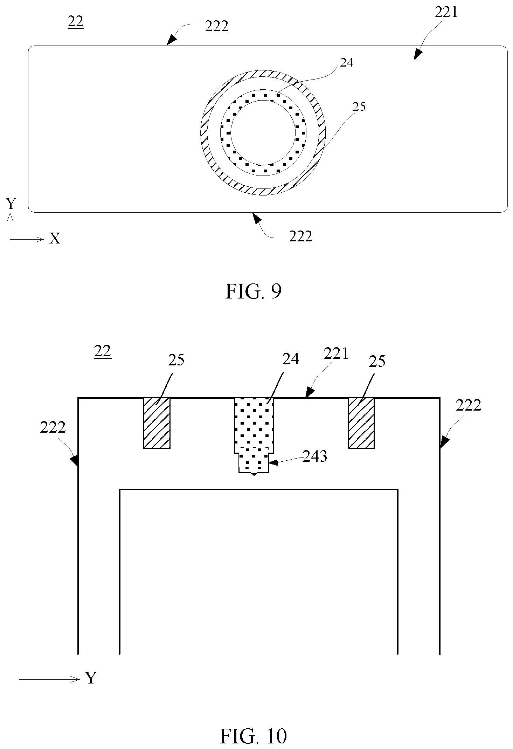

For example, as shown in FIG. 9, both the pressure relief score 24 and the isolation groove 25 are annular, and the isolation groove 25 is arranged to surround the pressure relief score 24. Since the material extruded during the formation of the annular pressure relief score 24 overflows in all directions, arranging the isolation groove 25 as an annular shape surrounding the pressure relief score 24 effectively blocks the material overflowing from all directions.

Certainly, in addition to providing an annular isolation groove 25 in the external region of the pressure relief score 24, an annular isolation groove 25 may also be provided in the internal region of the pressure relief score 24 at the same time.

It can be understood that the above "annular" may be a circular or elliptical annular shape, and the annular shape may be closed along its circumference or have a gap along its circumference. In FIG. 9, a circular and closed annular shape is used as an example, which is not limited by the present application.

In some embodiments, a volume of the main body portion 241 of the pressure relief score 24 is less than or equal to a total volume of the isolation groove 25 located between the main body portion 241 and the second wall 222 on the first wall 221, to maximize the function of the isolation groove 25, enabling it to accommodate as much as possible the material extruded during the formation of the pressure relief score 24, thereby preventing this material from flowing to the surface of the housing 22 of the battery cell 20.

To reduce the impact of the isolation groove 25 on the pressure relief function of the pressure relief score 24, in some embodiments, a thickness of a region on the first wall 221 where the isolation groove 25 is located is greater than or equal to a thickness of a region on the first wall 221 where the pressure relief score 24 is located. For example, a residual thickness of the isolation groove 25 on the first wall 221 is greater than or equal to a residual thickness of the pressure relief score 24, or in other words, a depth of the isolation groove 25 is less than a depth of the pressure relief score 24.

In a case of thermal runaway of the battery cell 20, the pressure relief score 24 needs to open as quickly as possible to rapidly discharge the high-temperature and high-pressure emissions generated inside the battery cell 20. Therefore, on the first wall 221, the thickness of the region where the pressure relief score 24 is located is minimized to enable it to open preferentially.

In some embodiments, the thickness of the region on the first wall 221 where the isolation groove is located is greater than or equal to the thickness of the region on the first wall 221 where the pressure relief score 24 is located and less than or equal to five times the thickness of the region on the first wall 221 where the pressure relief score 24 is located. Preferably, the thickness of the region on the first wall 221 where the isolation groove 25 is located is greater than or equal to two times the thickness of the region on the first wall 221 where the pressure relief score 24 is located and less than or equal to three times the thickness of the region on the first wall 221 where the pressure relief score 24 is located.

Taking the rectangular pressure relief score 24 and isolation groove 25 shown in FIG. 4 and FIG. 5 as an example, the depth relationship between pressure relief scores 24 and isolation grooves 25 of other shapes is similar. It may be set that d ≤ f ≤ 5d, preferably, 2d ≤ f ≤3d, where f is the thickness of the region on the first wall 221 where the isolation groove 25 is located, and d is the thickness of the region on the first wall 221 where the pressure relief score 24 is located.

When the thickness f of the region on the first wall 221 where the isolation groove 25 is located and the thickness d of the region where the pressure relief score 24 is located satisfy the above relationship, the impact of the isolation groove 25 on the pressure relief function of the pressure relief score 24 is reduced, while not affecting the ability of the isolation groove 25 to block extruded material.

As an example, as shown in Table 2, taking the pressure relief score 24 in the I-like shape shown in FIG. 6 or FIG. 7 as an example, assuming the residual thickness d of the position where the pressure relief score 24 was located was 0.42 mm, the flatness of the second wall 222 of the housing 22 and the burst pressure, that is, the opening valve pressure, of the pressure relief score 24 were tested in a case of f = d, f = 2d, f = 3d, f = 4d, and f = 5d. To improve the accuracy of the test results, five tests were conducted, and the average of the five test results was taken as the test result.

**Table 2**

| f (mm) | | Burst pressure (MPa) | Flatness |
|---|---|---|---|
| f = d | Test 1 | 0.42 | 0.21 |
| | Test 2 | 0.44 | 0.22 |
| | Test 3 | 0.43 | 0.33 |
| | Test 4 | 0.46 | 0.35 |
| | Test 5 | 0.44 | 0.29 |
| f = 2d | Test 1 | 0.82 | 0.13 |
| | Test 2 | 0.87 | 0.12 |
| | Test 3 | 0.85 | 0.16 |
| | Test 4 | 0.8 | 0.17 |
| | Test 5 | 0.9 | 0.16 |
| f = 3d | Test 1 | 0.93 | 0.08 |
| | Test 2 | 0.96 | 0.09 |
| | Test 3 | 1.03 | 0.1 |
| | Test 4 | 1.05 | 0.12 |
| | Test 5 | 1.11 | 0.08 |
| f = 4d | Test 1 | 0.93 | 0.23 |
| | Test 2 | 1.13 | 0.32 |
| | Test 3 | 1.06 | 0.25 |
| | Test 4 | 0.95 | 0.23 |
| | Test 5 | 0.93 | 0.28 |
| f = 5d | Test 1 | 1.12 | 0.34 |
| | Test 2 | 0.95 | 0.32 |
| | Test 3 | 0.89 | 0.35 |
| | Test 4 | 0.85 | 0.38 |
| | Test 5 | 1.07 | 0.29 |

Setting f to be greater than or equal to d, preferably greater than or equal to 2d, reduces the impact of the isolation groove 25 on the burst pressure of the pressure relief score 24; and setting f to be less than or equal to 5d, preferably less than or equal to 3d, increases the volume of the isolation groove 25, which is beneficial to the ability of the isolation groove 25 to block material.

The test data in Table 2 was processed to obtain the following:
For f = d, the average flatness from the five tests was (0.21 + 0.22 + 0.33 + 0.35 + 0.29) / 5 = 0.28, and the average burst pressure from the five tests was (0.42 + 0.44 + 0.43 + 0.46 + 0.44) / 5 = 0.44 MPa.
For f = 2d, the average flatness from the five tests was (0.13 + 0.12 + 0.16 + 0.17 + 0.16) / 5 = 0.15, and the average burst pressure from the five tests was (0.82 + 0.87 + 0.85 + 0.86 + 0.9) / 5 = 0.86 MPa.
For f = 3d, the average flatness from the five tests was (0.13+0.12+0.16+0.17+0.16)/ 5 = 0.15, and the average burst pressure from the five tests was (0.82+0.87+0.85+0.86+0.9) / 5 = 0.86 MPa;
For f = 4d, the average flatness from the five tests was (0.23 + 0.32 + 0.25 + 0.23 + 0.28) / 5 = 0.26, and the average burst pressure from the five tests was (0.93 + 1.13 + 1.06 + 0.95 + 0.93) / 5 = 1.0 MPa.
For f = 5d, the average flatness from the five tests was (0.34 + 0.32 + 0.35 + 0.38 + 0.29) / 5 = 0.34, and the average burst pressure from the five tests was (1.12 + 0.95 + 0.89 + 0.85 + 1.07) / 5 = 0.98 MPa.

In a case that the requirements for the flatness of the housing 22 are high, the flatness typically needs to be less than or equal to 0.2, and in a case that the requirements for the burst pressure of the pressure relief score 24 are high, the burst pressure of the pressure relief score 24 typically needs to be within the range of 1.0 ± 0.2 MPa.

From Table 2, it can be seen that when 2d ≤ f ≤ 3d, for example, 0.42 mm ≤ f ≤ 2.1 mm, the flatness of the second wall 222 can reach a level of less than or equal to 0.2, meeting the flatness requirements for the housing 22 in most scenarios, and the burst pressure of the pressure relief score 24 can be controlled within the range of 1.0 ± 0.2 MPa, also meeting the burst pressure requirements for the pressure relief score 24 in most scenarios.

It can be understood that when the requirements for flatness and burst pressure are not high, the range of f may be appropriately expanded, for example, to d ≤ f ≤ 4d, such as 0.84 mm ≤ f ≤ 1.68 mm; or further expanded to d ≤ f ≤ 5d, such as 0.84 mm ≤ f ≤ 1.26 mm.

During the formation of the isolation groove 25 on the first wall 221, a certain amount of material is also extruded. To reduce the impact of this material on the surface of the housing 22 in subsequent processes, in the direction perpendicular to the second wall 222, the distance between the isolation groove 25 and the second wall 222 should not be too small.

In some embodiments, in the direction perpendicular to the second wall 222, a distance between a portion of the isolation groove 25 opposite to the pressure relief score 24 and the second wall 222 is greater than or equal to a dimension of the isolation groove 25 in the second direction Y. Preferably, in the direction perpendicular to the second wall 222, the distance between the portion of the isolation groove 25 opposite to the pressure relief score 24 and the second wall 222 is greater than or equal to three times the dimension of the isolation groove 25 in the second direction Y.

Still taking the rectangular pressure relief score 24 and isolation groove 25 shown in FIG. 4 and FIG. 5 as an example, it is assumed that the distance between the isolation groove 25 and the second wall 222 in the second direction Y is g, and the dimension of the isolation groove 25 is a. In this case, it may be set that g ≥ a, preferably, g ≥ 3a.

When the distance g between the isolation groove 25 and the second portion 222 satisfies the above relationship, the impact of the material extruded during the formation of the isolation groove 25 on the second wall 222 in subsequent processes is reduced.

As an example, as shown in Table 3, taking the pressure relief score 24 in the I-like shape shown in FIG. 6 or FIG. 7 as an example, assuming the dimension a of the isolation groove 25 in the second direction Y was 2 mm, the flatness of the second wall 222 of the housing 22 was tested in a case of g = 2, g = 4, g = 6, g = 8, g = 10, g = 12, and g = 14. To improve the accuracy of the test results, the average of five tests was taken as the test result.

**Table 3**

| g (mm) | | Flatness |
|---|---|---|
| g = 2 | Test 1 | 0.45 |
| | Test 2 | 0.44 |
| | Test 3 | 0.52 |
| | Test 4 | 0.58 |
| | Test 5 | 0.41 |
| g = 4 | Test 1 | 0.33 |
| | Test 2 | 0.38 |
| | Test 3 | 0.43 |
| | Test 4 | 0.45 |
| | Test 5 | 0.43 |
| g=6 | Test 1 | 0.18 |
| | Test 2 | 0.17 |
| | Test 3 | 0.16 |
| | Test 4 | 0.20 |
| | Test 5 | 0.19 |
| g = 8 | Test 1 | 0.08 |
| | Test 2 | 0.16 |
| | Test 3 | 0.08 |
| | Test 4 | 0.12 |
| | Test 5 | 0.18 |
| g = 10 | Test 1 | 0.12 |
| | Test 2 | 0.16 |
| | Test 3 | 0.12 |
| | Test 4 | 0.13 |
| | Test 5 | 0.07 |
| g = 12 | Test 1 | 0.13 |
| | Test 2 | 0.11 |
| | Test 3 | 0.08 |
| | Test 4 | 0.09 |
| | Test 5 | 0.15 |
| g = 14 | Test 1 | 0.08 |
| | Test 2 | 0.10 |
| | Test 3 | 0.12 |
| | Test 4 | 0.07 |
| | Test 5 | 0.09 |

Setting g to be greater than or equal to a, preferably greater than or equal to 3a, reduces the impact of the material generated during the manufacturing process of the isolation groove 25 on the second wall 222.

The test data in Table 3 was processed to obtain the following:
For g = 2, the average flatness from the five tests was (0.45 + 0.44 + 0.52 + 0.58 + 0.41) / 5 = 0.50.
For g = 4, the average flatness from the five tests was (0.33 + 0.38 + 0.43 + 0.45 + 0.43) / 5 = 0.40.
For g = 6, the average flatness from the five tests was (0.18 + 0.17 + 0.16 + 0.20 + 0.19) / 5 = 0.18.
For g = 8, the average flatness from the five tests was (0.08 + 0.16 + 0.08 + 0.12 + 0.18) / 5 = 0.12.
For g = 10, the average flatness from the five tests was (0.12 + 0.16 + 0.12 + 0.13 + 0.07) / 5 = 0.12.
For g = 12, the average flatness from the five tests was (0.13 + 0.11 + 0.08 + 0.09 + 0.15) / 5 = 0.11.
For g = 14, the average flatness from the five tests was (0.08 + 0.10 + 0.12 + 0.07 + 0.09) / 5 = 0.09.

When the requirements for the flatness of the housing 22 are high, the flatness typically needs to be less than or equal to 0.2.

From Table 3, it can be seen that when g ≥ 3a, for example, g ≥ 6 mm, the flatness can reach a level of less than or equal to 0.2, meeting the flatness requirements for the housing 22 in most scenarios.

It can be understood that when the requirements for flatness are not high, the range of g may be appropriately expanded, for example, to g ≥ 2a, such as g ≥ 4 mm; or further expanded to g ≥ a, such as g ≥ 2 mm.

Since the isolation groove 25 is integrally formed on the first wall 221, for example, by stamping to form the isolation groove 25 on the first wall 221, the isolation groove 25 needs to block the material extruded at the pressure relief score 24 while also preventing the material extruded during its own stamping process from affecting the morphology of the pressure relief score 24, thereby reducing its impact on the burst pressure of the pressure relief score 24. Therefore, an appropriate distance needs to be maintained between the isolation groove 25 and the pressure relief score 24.

In some embodiments, in the direction perpendicular to the second wall 222, a distance between a portion of the isolation groove 25 opposite to the pressure relief score 24 and the pressure relief score 24 is greater than or equal to a dimension of the isolation groove 25. Optionally, in the direction perpendicular to the second wall 222, the distance between the portion of the isolation groove 25 opposite to the pressure relief score 24 and the pressure relief score 24 is greater than or equal to three times the dimension of the isolation groove 25.

Still taking the rectangular pressure relief score 24 and isolation groove 25 shown in FIG. 4 and FIG. 5 as an example, it is assumed that the distance between the isolation groove 25 and the pressure relief score 24 in the second direction Y is h, and the dimension of the isolation groove 25 is a. In this case, it may be set that h ≥ a, preferably, h ≥ 3a.

For the isolation groove 25 provided between the pressure relief score 24 and the second wall 222, maintaining an appropriate distance between the isolation groove 25 and the pressure relief score 24 in the direction perpendicular to the second wall 222, and maintaining a distance between the isolation groove 25 and the second wall 222, reduce the impact of the material extruded during the formation of the isolation groove 25 on the second wall 222 in subsequent processes, and also reduce the impact of the material extruded during the formation of the isolation groove 25 on the morphology of the pressure relief score 24, thereby reducing the impact on the burst pressure of the pressure relief score 24.

As an example, as shown in Table 4, taking the pressure relief score 24 in the I-like shape shown in FIG. 6 or FIG. 7 as an example, assuming the dimension a of the pressure relief score 24 in the second direction Y was 2 mm, the burst pressure of the pressure relief score 24 was tested in a case of h = 1, h = 2, h = 3, h = 4, h = 5, h = 6, and h = 7. To improve the accuracy of the test results, the average of five tests was taken as the test result.

**Table 4**

| h (mm) | | Burst pressure (MPa) |
|---|---|---|
| h = 1 | Test 1 | 0.52 |
| | Test 2 | 0.32 |
| | Test 3 | 0.44 |
| | Test 4 | 0.35 |
| | Test 5 | 0.72 |
| h = 2 | Test 1 | 0.65 |
| | Test 2 | 0.46 |
| | Test 3 | 0.66 |
| | Test 4 | 0.63 |
| | Test 5 | 0.77 |
| h = 3 | Test 1 | 0.81 |
| | Test 2 | 0.82 |
| | Test 3 | 0.78 |
| | Test 4 | 0.72 |
| | Test 5 | 0.70 |
| h = 4 | Test 1 | 0.83 |
| | Test 2 | 0.82 |
| | Test 3 | 0.87 |
| | Test 4 | 0.90 |
| | Test 5 | 0.82 |
| h = 5 | Test 1 | 0.91 |
| | Test 2 | 0.97 |
| | Test 3 | 0.93 |
| | Test 4 | 1.23 |
| | Test 5 | 1.12 |
| h = 6 | Test 1 | 1.03 |
| | Test 2 | 1.01 |
| | Test 3 | 0.95 |
| | Test 4 | 0.98 |
| | Test 5 | 0.99 |
| h = 7 | Test 1 | 1.02 |
| | Test 2 | 1.03 |
| | Test 3 | 0.99 |
| | Test 4 | 0.98 |
| | Test 5 | 0.96 |
| h = 8 | Test 1 | 1.03 |
| | Test 2 | 1.01 |
| | Test 3 | 0.97 |
| | Test 4 | 0.99 |
| | Test 5 | 0.97 |

Setting h to be greater than or equal to a, preferably greater than or equal to 3a, reduces the impact of the material extruded during the formation of the isolation groove 25 on the morphology of the pressure relief score 24, thereby reducing the impact on the burst pressure of the pressure relief score 24.

The test data in Table 4 was processed to obtain the following:
For h = 1, the average burst pressure from the five tests was (0.52 + 0.32 + 0.44 + 0.35 + 0.72) / 5 = 0.47 MPa.
For h = 2, the average burst pressure from the five tests was (0.65 + 0.46 + 0.66 + 0.63 + 0.77) / 5 = 0.63 MPa.
For h = 3, the average burst pressure from the five tests was (0.81 + 0.82 + 0.78 + 0.72 + 0.70) / 5 = 0.77 MPa.
For h = 4, the average burst pressure from the five tests was (0.83 + 0.82 + 0.87 + 0.90 + 0.82) / 5 = 0.85 MPa.
For h = 5, the average burst pressure from the five tests was (0.91 + 0.97 + 0.93 + 1.23 + 1.12) / 5 = 1.03 MPa.
For h = 6, the average burst pressure from the five tests was (1.03 + 1.01 + 0.95 + 0.98 + 0.99) / 5 = 0.99 MPa.
For h = 7, the average burst pressure from the five tests was (1.02 + 1.03 + 0.99 + 0.98 + 0.96) / 5 = 0.10 Mpa.
For h = 8, the average burst pressure from the five tests was (1.03 + 1.01 + 0.97 + 0.99 + 0.97) / 5 = 0.99 MPa.

When the requirements for the burst pressure of the pressure relief score 24 are high, the burst pressure of the pressure relief score 24 typically needs to be within the range of 1.0 ± 0.2 MPa.

From Table 4, it can be seen that when h ≥ 3a, for example, h ≥ 6 mm, the burst pressure of the pressure relief score 24 can be controlled within the range of 1.0 ± 0.2 MPa, meeting the burst pressure requirements for the pressure relief score 24 in most scenarios.

It can be understood that when the requirements for flatness and burst pressure are not high, the range of h can be appropriately expanded, for example, to h ≥ 2a, such as h ≥ 4 mm; or further expanded to h ≥ a, such as h ≥ 2 mm.

In some embodiments, the pressure relief score 24 includes a single-step or multi-step structure. Each step in the step structure may be, for example, rectangular, trapezoidal, triangular, or other regular or irregular shapes. For a pressure relief score 24 with a multi-step structure, the multi-step structure may be formed by multiple stampings during the formation of the pressure relief score 24. Specifically, during the formation of the pressure relief score 24, multiple stampings are performed at corresponding positions on the first wall 221, with each stamping forming one step, thereby obtaining the final pressure relief score 24 through multiple forming steps. The stepwise formation of the pressure relief score 24 reduces the granularity of the extruded material, thereby reducing the impact on the surface of the housing 22.

For example, as shown in FIG. 10, the pressure relief score 24 includes multiple steps 243, where the depth of each step 243 may be the same or different. Optionally, the depth of the multiple steps 243 may increase gradually from the inside to the outside of the battery cell 20, meaning that as the number of stampings increases, the depth of each stamping increases. As an example, FIG. 10 shows a step structure that sequentially includes a first step 243, a second step 243, and a third step 243 from top to bottom. The depth of the first step 243 is greater than the depth of the second step 243, and the depth of the second step 243 is greater than the depth of the third step 243. The first step 243 and the second step 243 are rectangular in shape, and the third step 243 is an inverted triangular shape.

A battery 100 is also provided, including the battery cell 20 described in any of the above embodiments.

This application provides an electric apparatus, including the battery 100 described in any of the above embodiments, where the battery 100 is configured to provide electrical energy to the electric apparatus, such as the vehicle 1 shown in FIG. 1.

From the above description, it can be seen that the pressure relief score 24 is formed on the first wall 221 of the battery cell 20 in the embodiments of the present application, and at least one isolation groove 25 is provided in a region on the first wall 221 between the pressure relief score 24 and the second wall 222, to block the material extruded during the stamping formation of the pressure relief score 24 on the first wall 221 from flowing toward the second wall 222, thereby reducing surface defects on the second wall 222 caused by the extruded material in subsequent processes.

It should be noted that, provided there is no conflict, the various embodiments described in the present application and/or the technical features in each embodiment can be arbitrarily combined with each other, and the technical solutions obtained after combination also fall within the scope of protection of the present application.

Although the present application has been described with reference to preferred embodiments, various improvements can be made thereto, and components therein can be replaced with equivalents without departing from the scope of the present application. In particular, as long as there is no structural conflict, the technical features mentioned in the various embodiments can be combined in any manner. The present application is not limited to the specific embodiments disclosed herein but includes all technical solutions falling within the scope of the claims.

## Claims

1. A battery cell, **characterized by** comprising a first wall and a second wall perpendicular to the first wall, wherein a pressure relief score is integrally formed on the first wall, an isolation groove is provided in a region on the first wall between the pressure relief score and the second wall, the pressure relief score comprises a main body portion, and the main body portion is opposite to the isolation groove in a direction perpendicular to the second wall,
wherein, in the direction perpendicular to the second wall, a ratio of a distance between the main body portion and the second wall to a dimension of the main body portion is greater than or equal to 10.

2. The battery cell according to claim 1, **characterized in that** in the direction perpendicular to the second wall, the ratio of the distance between the main body portion and the second wall to the dimension of the main body portion is greater than or equal to 12.

3. The battery cell according to claim 1 or 2, **characterized in that** multiple isolation grooves are provided, and the multiple isolation grooves are arranged on two sides of the pressure relief score in the direction perpendicular to the second wall.

4. The battery cell according to any one of claims 1 to 3, wherein an opening of the isolation groove faces a same direction as an opening of the pressure relief score.

5. The battery cell according to any one of claims 1 to 4, **characterized in that** the second wall is a wall with a largest area of the battery cell.

6. The battery cell according to any one of claims 1 to 5, **characterized in that** a projection of the pressure relief score on the first wall comprises the main body portion extending along a first direction and two extension portions respectively located at two ends of the main body portion and extending along a second direction, wherein the first direction intersects with the second direction.

7. The battery cell according to claim 6, **characterized in that** the first direction is parallel to the second wall, and the second direction is perpendicular to the second wall.

8. The battery cell according to claim 6 or 7, **characterized in that** the extension portions are located on one side of the main body portion in the second direction, or the extension portions are located on two sides of the main body portion in the second direction.

9. The battery cell according to claim 8, **characterized in that** a projection of the isolation groove on a side where the extension portions are located on the first wall is located between the two extension portions in the first direction and does not extend beyond ends of the two extension portions in the second direction.

10. The battery cell according to any one of claims 6 to 9, **characterized in that** a dimension of the main body portion along the first direction is equal to a sum of dimensions of the two extension portions along the second direction.

11. The battery cell according to any one of claims 1 to 5, **characterized in that** a projection of the pressure relief score on the first wall is annular.

12. The battery cell according to claim 11, **characterized in that** a projection of the isolation groove on the first wall is annular and surrounds the pressure relief score.

13. The battery cell according to any one of claims 1 to 12, **characterized in that** a thickness of a region on the first wall where the isolation groove is located is greater than a thickness of a region on the first wall where the pressure relief score is located.

14. The battery cell according to claim 13, **characterized in that** the thickness of the region on the first wall where the isolation groove is located is greater than or equal to the thickness of the region on the first wall where the pressure relief score is located and less than or equal to five times the thickness of the region on the first wall where the pressure relief score is located.

15. The battery cell according to claim 14, **characterized in that** the thickness of the region on the first wall where the isolation groove is located is greater than or equal to two times the thickness of the region on the first wall where the pressure relief score is located and less than or equal to three times the thickness of the region on the first wall where the pressure relief score is located.

16. The battery cell according to any one of claims 1 to 15, **characterized in that** in the direction perpendicular to the second wall, a distance between a portion of the isolation groove opposite to the pressure relief score and the second wall is greater than or equal to a dimension of the isolation groove.

17. The battery cell according to claim 16, **characterized in that** in the direction perpendicular to the second wall, the distance between the portion of the isolation groove opposite to the pressure relief score and the second wall is greater than or equal to three times the dimension of the isolation groove.

18. The battery cell according to any one of claims 1 to 17, **characterized in that** in the direction perpendicular to the second wall, a distance between the portion of the isolation groove opposite to the pressure relief score and the pressure relief score is greater than or equal to the dimension of the isolation groove.

19. The battery cell according to claim 18, **characterized in that** in the direction perpendicular to the second wall, the distance between the portion of the isolation groove opposite to the pressure relief score and the pressure relief score is greater than or equal to three times the dimension of the isolation groove.

20. The battery cell according to any one of claims 1 to 19, **characterized in that** the pressure relief score comprises a multi-step structure.

21. The battery cell according to any one of claims 1 to 20, **characterized in that** the battery cell comprises:
an electrode assembly;
a housing configured to accommodate the electrode assembly; and
an end cover configured to cover the electrode assembly within the housing, wherein the first wall is a wall of the housing opposite to the end cover.

22. A battery, **characterized by** comprising the battery cell according to any one of claims 1 to 21.

23. An electric apparatus, **characterized by** comprising the battery according to claim 22.
